# EUROPEAN PATENT SPECIFICATION

(11) **EP 1 362 279 B1**
(45) Date of publication and mention of the grant of the patent: **14.07.2004**
(21) Application number: 01977887.7
(22) Date of filing: 02.10.2001
(51) Int. Cl.: G06F 1/18

(54) **COMPUTER SYSTEM WITH MULTIPLE POWER INPUTS**
RECHNERSYSTEM MIT MEHREREN VERSORGUNGSEINGÄNGEN
SYSTEME INFORMATIQUE AVEC PLUSIEURS ENTREES D'ALIMENTATION

(30) Priority: 02.10.2000 US 678507
(43) Date of publication of application: 19.11.2003
(73) Proprietor: Sun Microsystems, Inc., Santa Clara, California 95054 (US)
(72) Inventor: HILEMAN, Vincent, P., Sunnyvale, CA 94086 (US); BIGIO, Aidymar, Scotts Valley, CA 95066 (US)
(74) Representative: Harris, Ian Richard
(86) International application number: PCT/US2001/042448
(87) International publication number: WO 2002/029533

(56) References cited:
- "MEANS TO SELECT MULTIPLE DIRECT CURRENT INLET ON EXPANSION UNIT" IBM TECHNICAL DISCLOSURE BULLETIN, IBM CORP. NEW YORK, US, vol. 40, no. 12, 1 December 1997 (1997-12-01), pages 81-83, XP000754099 ISSN: 0018-8689

## Description

### BACKGROUND OF THE INVENTION

### Field of the Invention

The invention relates generally to computer systems with FRU's (field replaceable units), and the ability to supply power to a computer system selectively through the front or the back of the chassis of the computer system.

### Description of the Related Art

Distributed computing systems (or computer networks) are generally known. Computer networks typically comprise a plurality of personal computers, or workstations, or network appliances and other data processing devices connected together for information exchange. At the heart of the computer network is one or more network servers, hereafter generally referred to as "servers." In most computer networks, network servers are responsible for managing the network, running applications, and administering documents or data generated at the attached data processing devices.

Network servers typically include one or more AC or DC power supplies, which serve the purpose of keeping the system up and running. Externally generated power which is provided to the server may have unacceptably wide variations in voltage and/or current. As a result, network servers typically filter power before supplying the power to sensitive components in the server.

Due to the fact that network servers manage and/or store data generated, the network server typically has mass storage capabilities. The mass storage capabilities may be implemented by a disk subsystem or disk array where one or more disk drives are combined. SCSI is one example of an interface standard that permits multiple hard disk drives to be daisy chained to a single interface connector.

One or more network servers are typically found in the data center for Internet Service Providers (ISPs) and Application Service Providers (ASPs). One issue at sites supporting network servers is that space is often at a premium, and the servers are often rack mounted and closely co-located. An additional issue is found in the need for network servers to be scalable, given the disparate size and growth rates of ISPs and ASPs.

As mentioned previously, sites supporting rack mounted network servers often have limited space. The servers should be designed with care to permit easy access and maintenance despite the limited space. To complicate matters, data centers in different geographical areas have different operational requirements. For example, American telecommunications service providers generally follow the spacial and environmental requirements defined by Network Equipment Building Standards (NEBS). In contrast, European telecommunications service providers generally follow standards defined by the European Telecommunications Standards Institute (ETSI). One difference between American and European telco requirements is the power cabling of servers. American telco servers traditionally receive power from the rear of the server, and European telco servers traditionally receive power from the front of the server. In addition, beyond the typical requirements in America and Europe, a particular service provider's needs might be unique, or change over time.

One possible solution is to manufacture a standard configuration having either rear access power or front access power. In the event that a telco provider's requirements differ from the standard configuration, a power cable external to the chassis can run from the side of the server with a power inlet to the side of the server with access to external power. This approach has multiple disadvantages. An extra cable outside of the chassis adds yet another point of failure to the server, potentially decreasing the amount of uptime server availability. In the event that the cable fails, replacing the cable could be quite difficult if the server's power inlet is positioned on an inaccessible side of a server, requiring the entire server to be physically moved - just to replace the cable.

Therefore, what is needed is a solution selectably permitting front or rear access power needs (or both) for a server. The solution could be flexible, and not force a user into an irreversible choice between front or rear access.

### SUMMARY

To overcome the limitations described above, and to overcome other limitations that will become apparent upon reading and understanding the present specification, the present invention discloses an apparatus for selectively supplying unfiltered power through one or more of multiple unfiltered power inputs to a power filter supported in a computer chassis. Allowing for multiple power inputs - on the power filter itself and on two or more surfaces of the computer chassis - adds great flexibility in where power cables external to the computer chassis may be located.

A feature is a power filter having multiple inputs for unfiltered power. The power filter may also include a power output for filtered power which has blind-mating capacity. The blind-mating capacity allows another component such as a backplane to easily be connected with the power filter.

Method embodiments allow selectable routing of power through one of multiple surfaces on the computer chassis, adapting a power filter in a computer with multiple power elements. While the description is in terms of the best mode for achieving one or more objectives, it will be appreciated by those skilled in the art that variations may be accomplished in view of those teachings without deviating from the scope of the invention as claimed.

### BRIEF DESCRIPTION OF DRAWINGS

FIG. 1 shows one embodiment of a computer system.
FIG. 2 shows another embodiment of a computer system.
FIG. 3 shows a further embodiment of a computer system.
FIG. 4 shows an embodiment of a power filter.
FIG. 5 shows a top view of a power filter.
FIG. 6 shows a cross sectional view of a power filter.
FIG. 7 shows a side view of a power filter.
FIG. 8 shows a side view of a housing cover.
FIG. 9 shows a perspective view of a housing cover.
FIG. 10 shows a power cable.
FIG. 11 is a flow diagram illustrating a method of selectably routing power through a computer chassis.
FIG. 12 illustrates a method for adapting a power filter.
FIG. 13 illustrates a method for selectively configuring a computer for receiving front access power.

### DETAILED DESCRIPTION

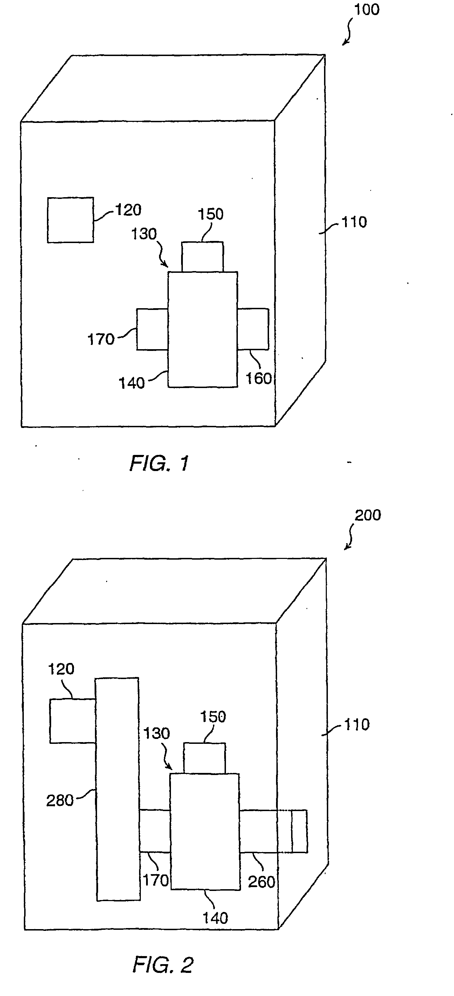

FIG. 1 shows one example of an embodiment of a computer system, or server. One example of the network server is the Netra ct1600 by Sun Microsystems, Inc. This embodiment shows a computer system 100 including a chassis 110 supporting a processor 120 and a power filter 130. The processor 120 and/or the power filter 130 may be physically supported directly by the chassis 110, or indirectly, for example through a backplane. Another example of a backplane may be a midplane. In general, a power filter receives power generated externally from the server, and filters out unacceptable variations before supplying the power to the rest of the server. The power filter 130 includes a filter housing 140, a first power input 150, a second power input 160, and a power output 170. The power filter 130 receives unfiltered power from one or both of the first power input 150 and the second power input 160. After the power has been filtered by the power filter 130, filtered power enters the rest of the computer system 100 through a filtered power output 170. Various embodiments of the computer system 100 and the power filter 130 handle AC power and/or DC power.

FIG. 2 shows another example of a computer system embodiment. A computer system 200 further includes a backplane 280 supported by the chassis 110 and supporting the processor 120. The backplane 280 receives power from the power filter 130 through the power output 170. The power output 170 can include blind-mating technology, permitting the backplane 280 to blind-mate with the power output 170. The power filter 130 receives unfiltered power from the first power input 150 and a second power input 260. The second power input 260 protrudes out of an aperture on a rear surface of the chassis 110. If not in use, the protruding second power input 260 may be covered to protect the computer system 200 and anyone servicing the computer system 200. An alternative embodiment does not have a protruding connector, but instead a cable coupling the second power input 260 to the rear surface of the chassis 110.

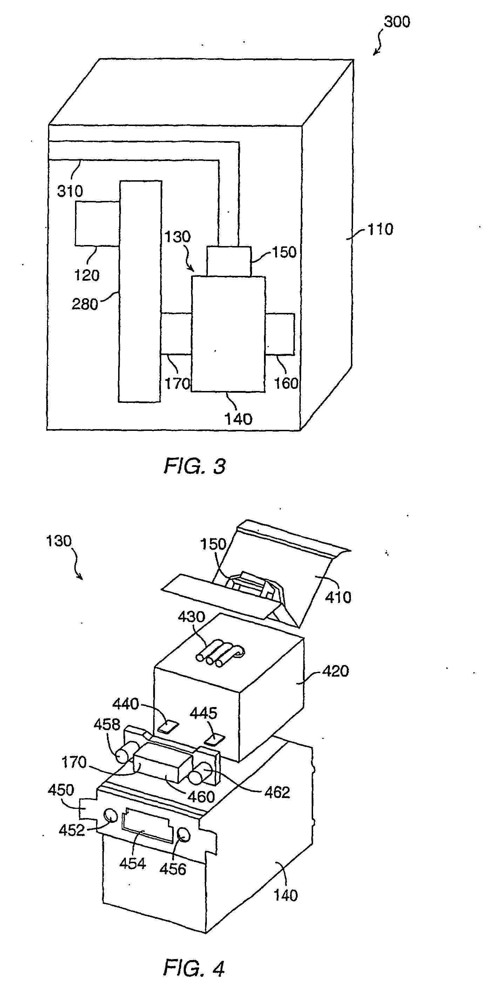

FIG. 3 shows a further example of a computer system embodiment. A computer system 300 further includes a power cable 310 coupling the first power input 150 to an aperture on a front surface of the chassis 110. If the computer system 300 is not receiving power through the front surface of the chassis 110, the power cable 310 may not be included, and the first power input 150 may be covered to protect the computer system 300 and anyone servicing the computer system 300. The first power input 150 can be angled away from the rear surface of the chassis and/or toward the front surface of the chassis to ease a connection of the power cable 310 with the first power input 150. Alternatively, the power cable 310 can be included even if the computer system is receiving power through another power input and/or another surface, such as through a rear surface of the chassis 110 and the second power input 160. If a telco provider's requirements change, then power cabling external to the chassis can be rapidly modified, and the computer system can readily accept power through another surface of the chassis 110.

In another embodiment, the power filter 130 includes a single input, and the power filter 130 can selectably be coupled to receive power through the aperture on the front surface of the chassis 110 or through the aperture on the rear surface of the chassis 110.

In another embodiment, other surfaces of the chassis 110 define one or more apertures through which the computer receives unfiltered power, for example a side surface, a top surface, and/or a bottom surface.

FIG. 4 shows an exploded diagram of multiple parts of an embodiment of the power filter 130. The power filter 130 may handle AC and/or DC power. The filter housing 140 includes includes a housing cover 410. The housing cover 410 can be part of the filter housing 140 or a separate part. The first power input 150 may be positioned on any surface of the filter housing 140, and in this embodiment is shown positioned on the housing cover 410. The filter housing 140 and the housing cover 410 support a filter 420. The filter 420 includes a first filter input 430 and a second filter input, not shown, on a rear surface of the filter 420. The positioning, shape, and configuration of the first filter input 430 and the second filter input is flexible. In another embodiment, the filter 420 includes a single input adapted to receive power through one or more of multiple inputs external to the filter 420. Filter outputs 440 and 445, output, for example, positive and negative 48 volts DC. Another embodiment of the filter 420 may support AC voltage, for example anywhere from 90 V to 240 V. Various other positioning, shape, number, and voltages for the filter outputs are possible. The filter outputs 440 and 445 are coupled to the power output 170. The power output 170 receives power from the filter outputs 440 and 445, and acts as a connector to another component within the chassis 110, such as the backplane 280. The power output 170 can include blind-mating features such as blindmating connector 460, for example to simplify coupling of the backplane 280 to the power output 170. The power output 170 may be accompanied by projections 458 and/or 462 that can help position the blind-mating connector 460 of the power output 170 relative to the filter housing 140. The blind-mating connector 460 and the projections 458 and 462 of the power output 170 extend through apertures 452, 454, and 456 defined by a plate 450. The plate 450 may be separate part or integral with the filter housing 140.

Other embodiments of the power filter position the power inputs and the power output such that the power inputs are positioned on the same surface, and/or the power output is positioned on the same surface as at least one of the power inputs.

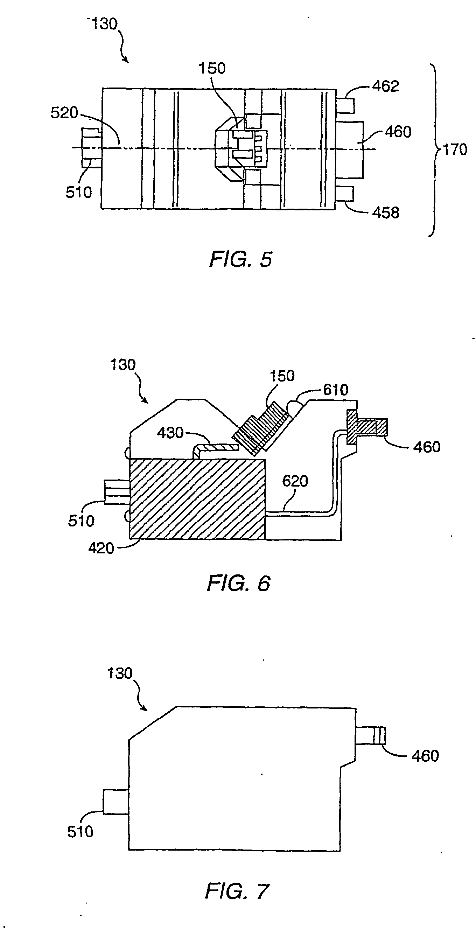

FIG. 5 shows a top view of the power filter 130. In the top view, a second filter input 510 is visible. FIG. 6 show a cross-sectional view of the power filter 130, as viewed across a cross-section line 520 in FIG. 5. In the cross-sectional-view of FIG. 6, conductive protrusions 610 and an internal cable 620 are visible. The internal cable 620 connects outputs of the filter 420 to the blind-mating connector 460 of the power output 170. FIG. 7 shows a side view of the power filter 130.

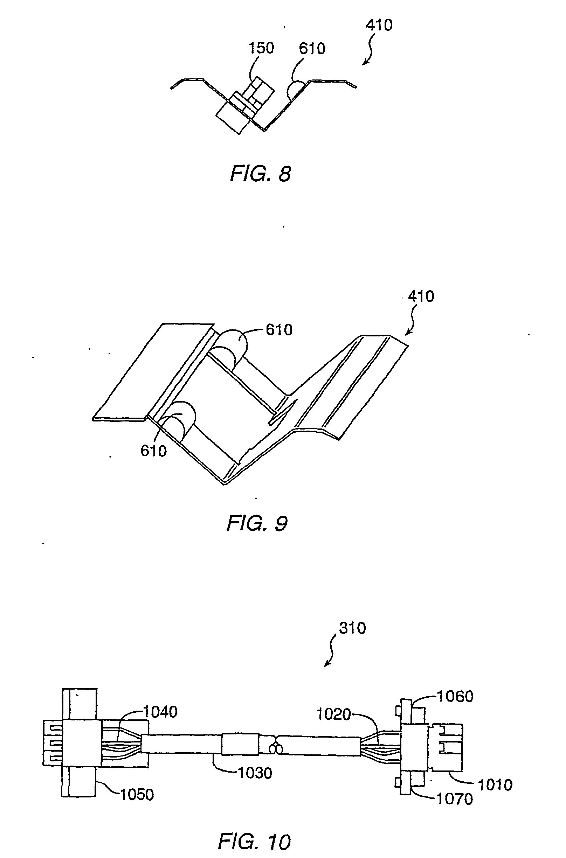

FIG. 8 shows a side view of the housing cover 410 showing a side view of the conductive protrusion 610 and the first power input 150. FIG. 9 shows a perspective view of the housing cover 410 and the conductive protrusion 610 positioned on each side of the housing cover 410. The positioning, shape, and number of the conductive protrusions 610 may be adjusted in other embodiments.

FIG. 10 shows an exemplary power cable 310. The power cable 310 helps route unfiltered power from an aperture on the chassis 110 to the power filter 130. The power cable 310 includes a first end 1010, a main cable 1030, and a second end 1050. The main cable 1030 has a plurality of power conductors. These power conductors have a first end 1020 and a second end 1040. The first end 1010 of the power cable 310 includes conducting protrusions 1060 and 1070. When the first end 1010 of the power cable 310 is connected with the first power input 150 of the power filter 130, the conducting protrusions 1060 and 1070 of the power cable 310 come into conductive contact with the conductive protrusions 610 of the power filter 130, performing a grounding function.

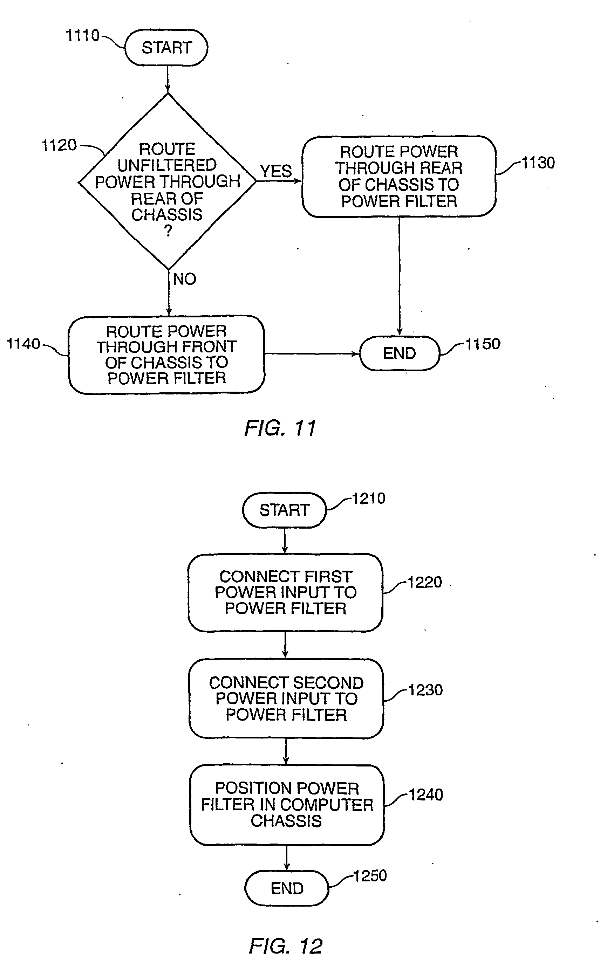

FIG. 11, FIG. 12, FIG. 13 show exemplary flow diagrams of some possible methods. Elements of the flow diagrams may be removed, rearranged, added to, and/or modified.

The flow diagram of FIG. 11 illustrates an exemplary method for selectably routing power through a front surface or a rear surface of a computer chassis. After start 1110, a decision is made whether unfiltered power should be routed through the front surface of the computer chassis or the rear surface of the computer chassis. Unfiltered power refers to power which has not been filtered by a power filter within the computer chassis. In 1130, unfiltered power is routed through the rear surface of the chassis and then to the power filter within the chassis. The power filter may handle AC and/or DC power. Alternatively, in 1140 power is routed through the front surface of the computer chassis and then to the power filter within the chassis. The method ends at 1150. Other embodiments may route power through other surfaces, such as a top surface, a side surface, an/or a bottom surface.

FIG. 12 illustrates an exemplary method for adapting a power filter. After start 1210, in 1220 a first power input is connected to the power filter. In 1230, a second power input is connected to the power filter. After 1240 where the power filter is positioned in the computer chassis, the method ends at 1250.

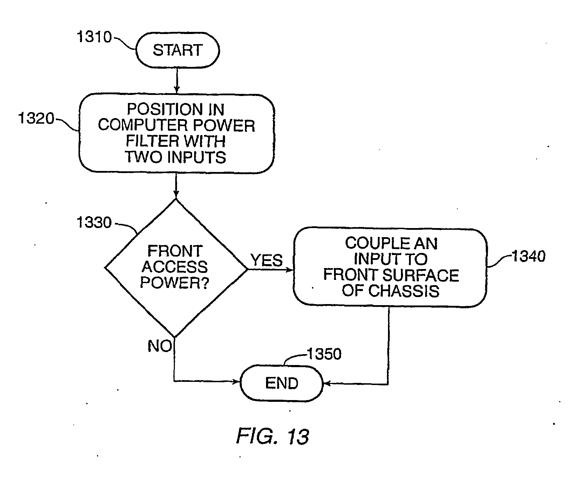

FIG. 13 illustrates an exemplary method for selectively configuring a computer for receiving front access power. After start 1310, in 1320 a power filter having a first input for unfiltered power and a second input for unfiltered power is positioned within a computer chassis. In 1330, a decision is made whether front access power is desired. In 1340, if front access power is desired, at least one of the unfiltered power inputs is coupled to the front surface of the chassis. The method ends at 1350.

While the preferred embodiments of the present invention have been illustrated herein in detail, it should be apparent that modifications and adaptations to those embodiments may occur to those skilled in the art without departing from the scope of the present invention as set forth in the following claims.

## Claims

1. A computer system (100) comprising:
a chassis (110) having a first aperture and a second aperture, wherein the first aperture is on a first surface of the chassis and the second aperture is on a second surface of the chassis;
a processor (120) supported in the chassis;
a power filter (130) supported in the chassis;
a first unfiltered power input (150) adapted to receive power through the first aperture of the chassis, and coupled within the chassis to the power filter;
a second unfiltered power input (160) adapted to receive power through the second aperture of the chassis, and coupled within the chassis to the power filter; and
a filtered power output (170) coupled to the power filter.

2. The computer system of claim 1, wherein the power filter includes:
a third unfiltered power input;
a fourth unfiltered power input; and
a filtered power output including a blind-mate connector.

3. The computer system of claim 2, wherein the power filter further includes a filter housing (140) having at least a first surface, a second surface, and a third surface, and wherein the third unfiltered power input is positioned on the first surface, the fourth unfiltered power input is positioned on the second surface, the filtered power output is positioned on the third surface, and the third unfiltered power input includes a connector angled toward the third surface.

4. The computer system of claim 2, wherein the power filter further includes a filter housing having at least a first surface, a second surface, and a third surface, and wherein the third unfiltered power input is positioned on the first surface, the fourth unfiltered power input is positioned on the second surface, the filtered power output is positioned on the third surface, and the third unfiltered power input includes a connector angled away from the second surface.

5. The computer system of claim 2, wherein the power filter further includes a filter housing having at least a first surface and a second surface, and wherein the third unfiltered power input is positioned on the first surface, the fourth unfiltered power input is positioned on the second surface, and the filtered power output is positioned on one of the first surface and the second surface.

6. The computer system of claim 2, wherein the power filter further includes a filter housing having at least a first surface and a second surface, and wherein the third unfiltered power input and the fourth unfiltered power input are positioned on the first surface.

7. The computer system of claim 6, wherein the filtered power output is positioned on the first surface.

8. The computer system of claim 6, wherein the filtered power output is positioned on the second surface.

9. The computer system of any of claims 2 to 8, wherein a filter housing includes at least one conducting protrusion positioned by the third unfiltered power input.

10. The computer system of claim 9, wherein the conducting protrusion is positioned to contact a conducting protrusion protruding from a power cable (310) connected with the third unfiltered power input.

11. The computer system of claim 10, wherein the power cable includes:
a conducting cable having a first end, a second end, and a longitudinal axis running along a length of the power cable;
a first connector connected to the first end of the power cable; and
a conductive protrusion coupled to the first end of the power cable, wherein the conductive protrusion extends substantially outward from the longitudinal axis of the power cable.

12. The computer system of claim 11, wherein the conductive protrusion is designed to contact a conductive protrusion protruding from a housing.

13. The computer system of claim 11, wherein the conductive protrusion of the power cable is screwless.

14. The computer system of claim 11, wherein the conductive protrusion of the power cable extends from the power cable such that, when the power cable connects with a housing, the conductive protrusion comes into conductive contact with an outside of the housing.

15. The computer system of any of the preceding claims, further comprising:
a backplane (280) supported in the chassis, said backplane supporting the processor and coupled to the filtered power output.

16. The computer system of claim 2, further comprising:
a power cable coupling the third unfiltered power input of the power filter to a front surface of the chassis.

17. The computer system of claim 2, further comprising:
a power cable coupling the third unfiltered power input of the power filter to a top surface of the chassis.

18. The computer system of claim 2, wherein the fourth unfiltered power input of the power filter is coupled to a rear surface of the chassis.

19. The computer system of claim 18, wherein the fourth unfiltered power input of the power filter protrudes through the rear surface of the chassis.

20. The computer system of claim 2, further comprising:
a power cable coupling the third unfiltered power input of the power filter to the first aperture of the chassis.

21. The computer system of claim 2, wherein the fourth unfiltered power input of the power filter is coupled to the second aperture of the chassis.

22. The computer system of claim 2, further comprising:
a backplane blind-mated with the filtered power output of the power filter.

23. A method of receiving power into a computer system (100), the method comprising:
supporting a power filter (130) within a chassis (110) of the computer system;
supporting a processor (120) within the chassis of the computer system;
wherein the chassis includes a first aperture for receiving a first unfiltered power input (150) and a second aperture for receiving a second unfiltered power input (160); and
coupling the first unfiltered power input and second unfiltered power input to the power filter within the chassis;
wherein the first aperture is on a first surface of the chassis and the second aperture is on a second surface of the chassis.

24. The method of claim 23 further comprising:
providing a power filter housing including:
a third unfiltered power input;
a fourth unfiltered power input; and
a filtered power output including a blind-mate connector.

25. The method of claim 24 further comprising:
positioning the third unfiltered power input on a first housing surface;
positioning the fourth unfiltered power input on a second housing surface;
positioning the filtered power output on a third housing surface; and
providing the third unfiltered power input with a connector angled toward the third housing surface.

26. The method of claim 24 further comprising:
positioning the third unfiltered power input on a first housing surface;
positioning the fourth unfiltered power input on a second housing surface;
positioning the filtered power output on a third housing surface; and
providing the third unfiltered power input with a connector angled away from the second housing surface.

27. The method of claim 24 further comprising:
positioning the third unfiltered power input on a first housing surface;
positioning the fourth unfiltered power input on a second housing surface; and
positioning the filtered power output on one of the first housing surface and the second housing surface.

28. The method of claim 24 further comprising: positioning the third unfiltered power input and the fourth unfiltered power input on a first housing surface, said housing having at least a first housing surface and a second housing surface.

29. The method of claim 28 further comprising: positioning the filtered power output on the first housing surface.

30. The method of claim 28 further comprising: positioning the filtered power output on the second housing surface.

31. The method of any of claims 24 to 30 further comprising positioning at least one conducting protrusion by the third unfiltered power input.

32. The method of claim 31 further comprising positioning the conducting protrusion to contact a conducting protrusion protruding from a power cable (3 10) connected with the third unfiltered power input, wherein the power cable includes:
a conducting cable having a first end, a second end, and a longitudinal axis running along a length of the power cable; and
a first connector connected to the first end of the power cable;
wherein the conductive protrusion of the power cable is coupled to the first end of the power cable, wherein the conductive protrusion extends substantially outward from the longitudinal axis of the power cable.

33. The method of any of claims 23 to 32 further comprising providing a backplane that is supported in the chassis for supporting the processor, and coupling the backplane to the filtered power output.

34. The method of claim 24 further comprising coupling the third unfiltered power input of the power filter to a front surface of the chassis using a power cable.

35. The method of claim 24 further comprising coupling the third unfiltered power input of the power filter to a top surface of the chassis using a power cable.

36. The method of claim 24 further comprising: coupling the fourth unfiltered power input of the power filter to a rear surface of the chassis.

37. The method of claim 36, further comprising: protruding the fourth unfiltered power input of the power filter through the rear surface of the chassis.

38. The method of claim 24 further comprising coupling the third unfiltered power input of the power filter to the first aperture of the chassis.

39. The method of claim 24 further comprising coupling the fourth unfiltered power input of the power filter to the second aperture of the chassis.

40. The method of claim 24 further comprising blind mating a backplane with the filtered power output of the power filter.

## Patentansprüche

1. Computersystem (100) mit:
einem Gehäuse (110), das eine erste Öffnung und eine zweite Öffnung hat, wobei die erste Öffnung sich auf einer ersten Oberfläche des Gehäuses befindet und die zweite Öffnung sich auf einer zweiten Oberfläche des Gehäuses befindet,
einen Prozessor (120), der in dem Gehäuse gehaltert ist,
einen Stromfilter (130), der in dem Gehäuse gehaltert ist,
einen ersten, ungefilterten Stromeingang (150), der dafür ausgelegt ist, Strom durch die erste Öffnung des Gehäuses zu empfangen und der in dem Gestell mit dem Stromfilter verbunden ist,
einen zweiten, ungefilterten Stromeingang (160), der dafür ausgelegt ist, Strom durch die zweite Öffnung des Gehäuses zu erhalten und der in dem Gehäuse mit dem Stromfilter verbunden ist, und
einen gefilterten Stromausgang (170), der mit dem Stromfilter verbunden ist.

2. Computersystem nach Anspruch 1, wobei der Stromfilter aufweist:
einen dritten Eingang für ungefilterten Strom,
einen vierten Eingang für ungefilterten Strom und
einen Ausgang für gefilterten Strom einschließlich einer "Blind-Mate"-Verbindung.

3. Computersystem nach Anspruch 2, wobei der Stromfilter weiterhin ein Filtergehäuse (140) aufweist, das zumindest eine erste Oberfläche, eine zweite Oberfläche und eine dritte Oberfläche hat, und wobei der dritte Eingang für ungefilterten Strom auf der ersten Fläche angeordnet ist, der vierte Eingang für ungefilterten Strom auf der zweiten Fläche angeordnet ist, der Ausgang für gefilterten Strom auf der dritten Oberfläche angeordnet ist und der dritte Eingang für ungefilterten Strom ein Verbindungselement aufweist, welches in Richtung der dritten Oberfläche abgewinkelt ist.

4. Computersystem nach Anspruch 2, wobei der Stromfilter weiterhin ein Filtergehäuse aufweist, das zumindest eine erste Oberfläche, eine zweite Oberfläche und eine dritte Oberfläche hat, und wobei der dritte Eingang für ungefilterten Strom auf der ersten Oberfläche angeordnet ist, der vierte Eingang für ungefilterten Strom auf der zweiten Oberfläche angeordnet ist, der Ausgang für gefilterten Strom auf der dritten Oberfläche angeordnet ist und der dritte Eingang für ungefilterten Strom ein Verbindungselement aufweist, welches von der zweiten Oberfläche weg abgewinkelt ist.

5. Computersystem nach Anspruch 2, wobei der Stromfilter weiterhin ein Filtergehäuse aufweist, das zumindest eine erste Oberfläche und eine zweite Oberfläche hat, und wobei der dritte Eingang für ungefilterten Strom auf der ersten Oberfläche angeordnet ist, der vierte Eingang für ungefilterten Strom auf der zweiten Oberfläche angeordnet ist und der Ausgang für gefilterten Strom auf einer der ersten oder zweiten Oberflächen angeordnet ist.

6. Computersystem nach Anspruch 2, wobei der Stromfilter weiterhin ein Filtergehäuse aufweist, das zumindest eine erste Oberfläche und eine zweite Oberfläche hat, und wobei der dritte Eingang für ungefilterten Strom und der vierte Eingang für ungefilterten Strom auf der ersten Oberfläche angeordnet sind.

7. Computersystem nach Anspruch 6, wobei der Ausgang für gefilterten Strom auf der ersten Oberfläche angeordnet ist.

8. Computersystem nach Anspruch 6, wobei der Ausgang für gefilterten Strom auf der zweiten Oberfläche angeordnet ist.

9. Computersystem nach einem der Ansprüche 2 bis 8, wobei ein Filtergehäuse zumindest einen leitenden Vorsprung aufweist, der durch den dritten Eingang für ungefilterten Strom positioniert ist.

10. Computersystem nach Anspruch 9, wobei der Vorsprung so positioniert ist, daß er mit einem leitfähigen Vorsprung in Kontakt steht, welcher von einem Stromkabel (310) hervorsteht, das mit dem dritten Eingang für ungefilterten Strom verbunden ist.

11. Computersystem nach Anspruch 10, wobei das Stromkabel aufweist:
ein leitendes Kabel, das ein erstes Ende, ein zweites Ende und eine Längsachse hat, die entlang eines Längenabschnittes des Stromkabels verläuft,
ein erstes Verbindungselement, welches mit dem ersten Ende des Stromkabels verbunden ist, und einen leitfähigen Vorsprung, der mit dem ersten Ende des Stromkabels verbunden ist, wobei der leitfähige Vorsprung sich im wesentlichen von der Längsachse des Stromkabels nach außen erstreckt.

12. Computersystem nach Anspruch 11, wobei der leitfähige Vorsprung dafür ausgelegt ist, mit einem leitfähigen Vorsprung in Kontakt zu treten, der von einem Gehäuse hervorsteht.

13. Computersystem nach Anspruch 11, wobei der leitfähige Vorsprung des Stromkabels keine Schraube aufweist.

14. Computersystem nach Anspruch 11, wobei der leitfähige Vorsprung des Stromkabels sich von dem Stromkabel aus derart erstreckt, daß, wenn das Stromkabel mit einem Gehäuse in Verbindung steht, der leitfähige Vorsprung in leitfähigen Kontakt mit einer Außenseite des Gehäuses kommt.

15. Computersystem nach einem der vorstehenden Ansprüche, welches weiterhin aufweist:
eine Rückwandplatine (280), die in dem Gehäuse gehaltert ist, wobei die Rückwandplatine den Prozessor trägt und mit dem Ausgang für gefilterten Strom verbunden ist.

16. Computersystem nach Anspruch 2, welches weiterhin aufweist:
ein Stromkabel, welches den dritten Eingang für ungefilterten Strom des Stromfilters mit einer vorderen Fläche des Gehäuses verbindet.

17. Computersystem nach Anspruch 2, welches weiterhin aufweist: ein Stromkabel, welches den dritten Eingang für ungefilterten Strom des Stromfilters mit einer oberen Fläche des Gehäuses verbindet.

18. Computersystem nach Anspruch 2, wobei der vierte Eingang für ungefilterten Strom des Stromfilters mit einer rückwärtigen Fläche des Gehäuses verbunden ist.

19. Computersystem nach Anspruch 18, wobei der vierte Eingang für ungefilterten Strom des Stromfilters durch die rückwärtige Oberfläche des Gehäuses hervorsteht.

20. Computersystem nach Anspruch 2, welches weiterhin aufweist:
ein Stromkabel, welches den dritten Eingang für ungefilterten Strom des Stromfilters mit der ersten Öffnung des Gehäuses verbindet.

21. Computersystem nach Anspruch 2, wobei der vierte Eingang für ungefilterten Strom des Stromfilters mit der zweiten Öffnung des Gehäuses verbunden ist.

22. Computersystem nach Anspruch 2, welches weiterhin aufweist:
eine Rückwandplatine, die über Blind-Mate-Verbindungen mit dem Ausgang für gefilterten Strom des Stromfilters verbunden ist.

23. Verfahren zum Aufnehmen von Strom in einem Computersystem (100), wobei das Verfahren aufweist:
Haltern eines Stromfilters (130) in einem Gehäuse (110) des Computersystems,
Haltern eines Prozessors (120) in dem Gehäuse des Computersystems,
wobei das Gehäuse eine erste Öffnung zum Aufnehmen eines ersten Eingangs (150) für ungefilterten Strom und eine zweite Öffnung für das Aufnehmen eines zweiten Eingangs (160) für ungefilterten Strom aufweist, und
Verbinden des ersten Eingangs für ungefilterten Strom und des zweiten Eingangs für ungefilterten Strom mit dem Stromfilter in dem Gehäuse, wobei die erste Öffnung sich auf einer ersten Oberfläche des Gehäuses befindet und die zweite Öffnung sich auf einer zweiten Oberfläche des Gehäuses befindet.

24. Verfahren nach Anspruch 23, welches weiterhin aufweist:
Bereitstellen eines Stromfiltergehäuses, einschließlich:
eines dritten Eingangs für ungefilterten Strom,
eines vierten Eingangs für ungefilterten Strom, und
eines Ausgangs für gefilterten Strom einschließlich einer Blind-Mate-Verbindung.

25. Verfahren nach Anspruch 24, welches weiterhin aufweist:
Anordnen des dritten Eingangs für ungefilterten Strom auf einer ersten Gehäuseoberfläche,
Anordnen des vierten Eingangs für ungefilterten Strom auf einer zweiten Gehäuseoberfläche,
Anordnen des Ausgangs für gefilterten Strom auf einer dritten Gehäuseoberfläche, und
Vorsehen des dritten Eingangs für ungefilterten Strom mit einem Verbindungselement, welches in Richtung der dritten Gehäuseoberfläche abgewinkelt ist.

26. Verfahren nach Anspruch 24, mit:
Anordnen des dritten Eingangs für ungefilterten Strom auf einer ersten Gehäuseoberfläche,
Positionieren des vierten Eingangs für ungefilterten Strom auf einer zweiten Gehäuseoberfläche,
Positionieren des Ausgangs für gefilterten Strom auf einer dritten Gehäuseoberfläche, und
Vorsehen des dritten Eingangs für ungefilterten Strom mit einem Verbindungselement, welches von der zweiten Gehäuseoberfläche weg abgewinkelt ist.

27. Verfahren nach Anspruch 24, welches weiterhin aufweist:
Positionieren des dritten Eingangs für ungefilterten Strom auf einer ersten Gehäuseoberfläche,
Positionieren des vierten Eingangs für ungefilterten Strom auf einer zweiten Gehäuseoberfläche, und
Positionieren des Ausgangs für gefilterten Strom auf einer der ersten und zweiten Gehäuseoberflächen.

28. Verfahren nach Anspruch 24, welches weiterhin aufweist: Positionieren des dritten Eingangs für ungefilterten Strom und des vierten Eingangs für ungefilterten Strom auf einer ersten Gehäuseoberfläche, wobei das Gehäuse zumindest eine erste Gehäuseoberfläche und eine zweite Gehäuseoberfläche hat.

29. Verfahren nach Anspruch 28, welches weiterhin aufweist: Anordnen des Ausgangs für gefilterten Strom auf der ersten Gehäuseoberfläche.

30. Verfahren nach Anspruch 28, welches weiterhin aufweist: Positionieren des Ausgangs für gefilterten Strom auf der zweiten Gehäuseoberfläche.

31. Verfahren nach einem der Ansprüche 24 bis 30, welches weiterhin das Positionieren zumindest eines leitenden Vorsprungs durch den dritten Eingang für ungefilterten Strom aufweist.

32. Verfahren nach Anspruch 31, welches weiterhin das Positionieren des leitfähigen Vorsprungs zum Kontaktieren eines leitfähigen Vorsprungs aufweist, der von einem Stromkabel (310) hervorsteht, weiches mit dem dritten Eingang für ungefilterten Strom verbunden ist, wobei das Stromkabel aufweist:
ein leitfähiges Kabel mit einem ersten Ende, einem zweiten Ende und einer Längsachse, die entlang eines Längenabschnittes des Stromkabels verläuft, und
ein erstes Verbindungselement, welches mit dem ersten Ende des Stromkabels verbunden ist,
wobei der leitfähige Vorsprung des Stromkabels mit dem ersten Ende des Stromkabels verbunden ist, wobei der leitfähige Vorsprung sich von der Längsachse des Stromkabels im wesentlichen nach außen erstreckt.

33. Verfahren nach einem der Ansprüche 23 bis 32, welches weiterhin das Bereitstellen einer Rückwandplatine aufweist, die in dem Gehäuse gehaltert wird, um den Prozessor aufzunehmen, sowie das Verbinden der Rückwandplatine mit dem Ausgang für gefilterten Strom aufweist.

34. Verfahren nach Anspruch 24, welches weiterhin aufweist, daß der dritte Eingang für ungefilterten Strom des Stromfilters mit einer vorderen Fläche des Gehäuses unter Verwendung eines Stromkabels verbunden wird.

35. Verfahren nach Anspruch 24, welches weiterhin das Verbinden des dritten Eingangs für ungefilterten Strom des Stromfilters mit einer oberen Fläche des Gehäuses unter Verwendung eines Stromkabels aufweist.

36. Verfahren nach Anspruch 24, welches weiterhin aufweist: Verbinden des vierten Eingangs für ungefilterten Strom des Stromfilters mit einer rückwärtigen Fläche des Gehäuses.

37. Verfahren nach Anspruch 36, welches weiterhin aufweist: Vorspringen des vierten Eingangs für ungefilterten Strom des Stromfilters durch die rückwärtige Fläche des Gehäuses.

38. Verfahren nach Anspruch 24, welches weiterhin das Verbinden des dritten Eingangs für ungefilterten Strom des Stromfilters mit der ersten Öffnung des Gehäuses aufweist.

39. Verfahren nach Anspruch 24, welches weiterhin das Verbinden des vierten Eingangs für ungefilterten Strom des Stromfilters mit der zweiten Öffnung des Gehäuses aufweist.

40. Verfahren nach Anspruch 24, welches weiterhin das Verbinden der Rückwandplatine über eine Blind-Mate-Verbindung mit dem gefilterten Ausgang des Stromfilters aufweist.

## Revendications

1. Système informatique (100) comprenant :
un châssis (110) possédant une première ouverture et une seconde ouverture, dans lequel la première ouverture est située sur une première surface du châssis et la seconde ouverture est située sur une seconde surface du châssis ;
un processeur (120) fixé dans le châssis ;
un filtre de puissance (130) fixé dans le châssis ;
une première entrée de puissance non filtrée (150) configurée pour recevoir une puissance à travers la première ouverture du châssis, et reliée, à l'intérieur du châssis, au filtre de puissance ;
une seconde entrée de puissance non filtrée (160) configurée pour recevoir une puissance à travers la seconde ouverture du châssis, et reliée, à l'intérieur du châssis, au filtre de puissance ; et
une sortie de puissance filtrée (170) reliée au filtre de puissance.

2. Système informatique selon la revendication 1, dans lequel le filtre de puissance comprend :
une troisième entrée de puissance non filtrée ;
une quatrième entrée de puissance non filtrée ; et
une sortie de puissance filtrée comprenant un connecteur blindé.

3. Système informatique selon la revendication 2, dans lequel le filtre de puissance comprend de plus un boîtier de filtre (140) possédant au moins une première surface, une seconde surface et une troisième surface, et dans lequel la troisième entrée de puissance non filtrée est placée sur la première surface, la quatrième entrée de puissance non filtrée est placée sur la seconde surface, la sortie de puissance filtrée est placée sur la troisième surface, et la troisième entrée de puissance non filtrée comprend un connecteur présentant un certain angle vers la troisième surface.

4. Système informatique selon la revendication 2, dans lequel le filtre de puissance comprend de plus un boîtier de filtre possédant au moins une première surface, une seconde surface et une troisième surface, et dans lequel la troisième entrée de puissance non filtrée est placée sur la première surface, la quatrième entrée de puissance non filtrée est placée sur la seconde surface, la sortie de puissance filtrée est placée sur la troisième surface, et la troisième entrée de puissance non filtrée comprend un connecteur présentant un certain angle s'éloignant de la seconde surface.

5. Système informatique selon la revendication 2, dans lequel le filtre de puissance comprend de plus un boîtier de filtre possédant au moins une première surface et une seconde surface, et dans lequel la troisième entrée de puissance non filtrée est placée sur la première surface, la quatrième entrée de puissance non filtrée est placée sur la seconde surface et la sortie de puissance filtrée est placée sur l'une de la première surface et de la seconde surface.

6. Système informatique selon la revendication 2, dans lequel le filtre de puissance comprend de plus un boîtier de filtre possédant au moins une première surface et une seconde surface, et dans lequel la troisième entrée de puissance non filtrée et la quatrième entrée de puissance non filtrée sont placées sur la première surface.

7. Système informatique selon la revendication 6, dans lequel la sortie de puissance filtrée est placée sur la première surface.

8. Système informatique selon la revendication 6, dans lequel la sortie de puissance filtrée est placée sur la seconde surface.

9. Système informatique selon l'une quelconque des revendications 2 à 8, dans lequel un boîtier de filtre comprend au moins une saillie conductrice mise en place par la troisième entrée de puissance non filtrée.

10. Système informatique selon la revendication 9, dans lequel la saillie conductrice est placée pour venir en contact avec une saillie conductrice sortant d'un câble de puissance (310) relié à la troisième entrée de puissance non filtrée.

11. Système informatique selon la revendication 10, dans lequel le câble de puissance comprend :
un câble conducteur possédant une première extrémité, une seconde extrémité et un axe longitudinal passant le long du câble de puissance ;
un premier connecteur relié à la première extrémité du câble de puissance ; et
une saillie conductrice reliée à la première extrémité du câble de puissance, dans lequel
la saillie conductrice s'étend notablement hors de l'axe longitudinal du câble de puissance.

12. Système informatique selon la revendication 11, dans lequel la saillie conductrice est conçue pour venir en contact avec une saillie conductrice sortant d'un boîtier.

13. Système informatique selon la revendication 11, dans lequel la saillie conductrice du câble de puissance ne possède pas de vis.

14. Système informatique selon la revendication 11, dans lequel la saillie conductrice du câble de puissance sort du câble de puissance de telle manière que, quand le câble de puissance se connecte à un boîtier, la saillie conductrice vienne en contact conducteur avec un élément extérieur du boîtier.

15. Système informatique selon l'une quelconque des revendications précédentes, comprenant de plus une carte mère (280) fixée dans le châssis, ladite carte mère portant le processeur et étant reliée à la sortie de puissance filtrée.

16. Système informatique selon la revendication 2, comprenant de plus un câble de puissance reliant la troisième entrée de puissance non filtrée du filtre de puissance à une surface frontale du châssis.

17. Système informatique selon la revendication 2, comprenant de plus un câble de puissance reliant la troisième entrée de puissance non filtrée du filtre de puissance à une surface sommitale du châssis.

18. Système informatique selon la revendication 2, dans lequel la quatrième entrée de puissance non filtrée du filtre de puissance est reliée à une surface arrière du châssis.

19. Système informatique selon la revendication 18, dans lequel la quatrième entrée de puissance non filtrée du filtre de puissance sort à travers la surface arrière du châssis.

20. Système informatique selon la revendication 2, comprenant de plus un câble de puissance reliant la troisième entrée de puissance non filtrée du filtre de puissance à la première ouverture du châssis.

21. Système informatique selon la revendication 2, dans lequel la quatrième entrée de puissance non filtrée du filtre de puissance est reliée à la seconde ouverture du châssis.

22. Système informatique selon la revendication 2, comprenant de plus une carte mère reliée par une liaison blindée à la sortie de puissance filtrée du filtre de puissance.

23. Procédé de réception de puissance dans un système informatique (100), le procédé comprenant :
l'agencement d'un filtre de puissance (130) dans un châssis (110) du système informatique ;
l'agencement d'un processeur (120) dans le châssis du système informatique ;
dans lequel le châssis comprend une première ouverture pour recevoir une première entrée de puissance non filtrée (150) et une seconde ouverture pour recevoir une seconde entrée de puissance non filtrée (160) ; et
la mise en relation de la première entrée de puissance non filtrée et de la seconde entrée de puissance non filtrée avec le filtre de puissance à l'intérieur du châssis ;
dans lequel la première ouverture est située sur une première surface du châssis et la seconde ouverture est située sur une seconde surface du châssis.

24. Procédé selon la revendication 23, comprenant de plus :
la fourniture d'un boîtier de filtre de puissance comprenant :
une troisième entrée de puissance non filtrée ;
une quatrième entrée de puissance non filtrée ; et
une sortie de puissance filtrée comprenant un connecteur blindé.

25. Procédé selon la revendication 24, comprenant de plus :
le placement de la troisième entrée de puissance non filtrée sur une première surface du boîtier ;
le placement de la quatrième entrée de puissance non filtrée sur une seconde surface du boîtier ;
le placement de la sortie de puissance filtrée sur une troisième surface du boîtier ; et
la fourniture à la troisième entrée de puissance non filtrée d'un connecteur présentant un certain angle vers la troisième surface du boîtier.

26. Procédé selon la revendication 24, comprenant de plus :
le placement de la troisième entrée de puissance non filtrée sur une première surface du boîtier ;
le placement de la quatrième entrée de puissance non filtrée sur une seconde surface du boîtier ;
le placement de la sortie de puissance filtrée sur une troisième surface du boîtier ; et
la fourniture à la troisième entrée de puissance non filtrée d'un connecteur présentant un certain angle s'éloignant de la seconde surface du boîtier.

27. Procédé selon la revendication 24, comprenant de plus :
le placement de la troisième entrée de puissance non filtrée sur une première surface du boîtier ;
le placement de la quatrième entrée de puissance non filtrée sur une seconde surface du boîtier ; et
le placement de la sortie de puissance filtrée sur l'une de la première surface du boîtier et de la seconde surface du boîtier.

28. Procédé selon la revendication 24, comprenant de plus le placement de la troisième entrée de puissance non filtrée et de la quatrième entrée de puissance non filtrée sur une première surface du boîtier, ledit boîtier possédant au moins une première surface de boîtier et une seconde surface de boîtier.

29. Procédé selon la revendication 28, comprenant de plus : le placement de la sortie de puissance filtrée sur la première surface du boîtier.

30. Procédé selon la revendication 28, comprenant de plus le placement de la sortie de puissance filtrée sur la seconde surface du boîtier.

31. Procédé selon l'une quelconque des revendications 24 à 30, comprenant de plus le placement d'au moins une saillie conductrice par la troisième entrée de puissance non filtrée.

32. Procédé selon la revendication 31, comprenant de plus le placement de la saillie conductrice de manière à ce qu'elle vienne en contact avec une saillie conductrice sortant d'un câble de puissance (310) relié à la troisième entrée de puissance non filtrée, dans lequel le câble de puissance comprend :
un câble conducteur possédant une première extrémité, une seconde extrémité et un axe longitudinal passant le long du câble de puissance ; et
un premier connecteur relié à la première extrémité du câble de puissance ;
dans lequel la saillie conductrice du câble de puissance est reliée à la première extrémité du câble de puissance, dans lequel la saillie conductrice s'étend notablement hors de l'axe longitudinal du câble de puissance.

33. Procédé selon l'une quelconque des revendications 23 à 32, comprenant de plus la fourniture d'une carte mère portée dans le châssis pour porter le processeur et la mise en relation de la carte mère avec la sortie de puissance filtrée.

34. Procédé selon la revendication 24, comprenant de plus la mise en relation de la troisième entrée de puissance non filtrée du filtre de puissance avec une surface frontale du châssis en utilisant un câble de puissance.

35. Procédé selon la revendication 24, comprenant de plus la mise en relation de la troisième entrée de puissance non filtrée du filtre de puissance avec une surface sommitale du châssis en utilisant un câble de puissance.

36. Procédé selon la revendication 24, comprenant de plus la mise en relation de la quatrième entrée de puissance non filtrée du filtre de puissance avec une surface arrière du châssis.

37. Procédé selon la revendication 36, comprenant de plus la sortie de la quatrième entrée de puissance non filtrée du filtre de puissance à travers la surface arrière du châssis.

38. Procédé selon la revendication 24, comprenant de plus la mise en relation de la troisième entrée de puissance non filtrée du filtre de puissance avec la première ouverture du châssis.

39. Procédé selon la revendication 24, comprenant de plus la mise en relation de la quatrième entrée de puissance non filtrée du filtre de puissance avec la seconde ouverture du châssis.

40. Procédé selon la revendication 24, comprenant de plus la mise en relation par une liaison blindée d'une carte mère avec la sortie de puissance filtrée du filtre de puissance.
